# EUROPÄISCHE PATENTANMELDUNG

(11) **EP 1 724 864 A1**
(43) Veröffentlichungstag der Anmeldung: **22.11.2006**
(21) Anmeldenummer: 05405352.5
(22) Anmeldetag: 18.05.2005
(51) Int. Cl.: H01M 8/02, H01M 8/12

(54) **Interkonnektor für eine planare Hochtemperatur-Brennstoffzelle**

(71) Anmelder: Sulzer Hexis AG, 8400 Winterthur (CH)
(72) Erfinder: Frei, Jeanette, 8400 Winthertur (CH)
(74) Vertreter: Sulzer Management AG

(57) **Zusammenfassung**

Der Interkonnektor (1) für eine planare Hochtemperatur-Brennstoffzelle trägt ein luftseitiges Oberflächenprofil (11) und ein gasseitiges Oberflächenprofil (12). Diese Profile spannen zwei parallele Kontaktebenen (21, 22) auf. Jeweils in einer Zone zwischen ersten bzw. zweiten Grundflächen (111, 112) des Profils und der einen der Kontaktebenen sind Strukturelemente (10) enthalten. Die Strukturelemente bilden luftseitige bzw. gasseitige Kontaktflächen (101, 102) auf der entsprechenden Kontaktebene. Trennwände (13) zwischen den beiden Grundflächen weisen eine Dicke d von mindestens 0.3 mm auf. Der Abstand a zwischen den beiden Kontaktebenen ist grösser als 2 mm. Das Verhältnis zwischen a und d kann grösser als 5 sein. Die Strukturelemente des einen Profils sind relativ zu den Strukturelementen des anderen Profils so angeordnet, dass an verschiedenen, uneingeschränkt vorgegebbaren Stellen jeweils zwischen einer luftseitigen und einer gasseitigen Kontaktfläche sowie senkrecht zu den Kontaktebenen ein mit Material gefüllter Verbindungsbereich (14) besteht. Zur Herstellung des Interkonnektors ist eine glatte, aus einem weitgehend porenfreien Werkstoff bestehende Platte (2) verwendet, aus der die Profile durch Materialabtrag heraus gearbeitet sind. Diese Herstellung ist durch Anwendung eines elektrochemischen Senkerosionsverfahrens oder eines photochemischen Ätzverfahrens durchgeführt.

## Beschreibung

Die Erfindung betrifft einen Interkonnektor für planare Hochtemperatur-Brennstoffzellen. Solche Brennstoffzellen sind Festoxidbrennstoffzellen (Solid Oxid Fuel Cells), die bei Temperaturen zwischen 700°C und 950°C arbeiten. Der Interkonnektor trennt eine Luft- von einer Gasseite und stellt eine elektrische Verbindung zwischen benachbarten Brennstoffzellen her.

Eine Batterie von planaren Brennstoffzellen umfasst einen Stapel von Zellen, in dem alternierend plattenförmige Interkonnektoren und elektrochemisch aktive PEN-Elemente (Scheiben mit drei Lagen: Positive Elektrode - Elektrolyt - Negative Elektrode) angeordnet sind. Ein Interkonnektor ist beispielsweise aus der EP-A- 1 075 033 bekannt.

Bei den hohen Temperaturen müssen die Interkonnektoren möglichst gut elektrisch leitend sein, wobei auch die an den Oberflächen entstehenden Oxidschichten leitend sein müssen. Der Wärmeausdehnungskoeffizient des Interkonnektors muss an jenen des Festelektrolyts angepasst und daher sehr klein sein. Aufgrund einer Vielzahl von Erfordernissen kommen für die Interkonnektoren nur sehr wenige Werkstoffe in Frage. Diese zeichnen sich durch einen hohen Chromgehalt aus. Sie sind sehr spröde und daher nur schlecht plastisch verformbar, so dass viele Bearbeitungsmethoden nicht angewendet werden können. Spannabtragende Methoden wie Fräsen sind zwar möglich, jedoch teuer und daher nicht serientauglich. Bisher sind die Interkonnektoren mittels Pulvermetallurgie hergestellt oder aus dünnen Blechen gefertigt worden. Die Pulvermetallurgie hat den Nachteil, dass für jedes Design ein teures Werkzeug gefertigt werden muss, was die Optimierung eines Designs in der Praxis schwierig macht. Bleche machen Schweissverbindungen erforderlich.

Unter "Design" ist eine topographische Strukturierung des Interkonnektors verstanden, die nach einem vorgegebenen Muster gestaltet ist. Strukturelemente dieser Strukturierung in Form von Noppen, Gasleitrippen und Abdichtungsdämmen bilden zwei Oberflächenprofile, nämlich ein luftseitiges und ein gasseitiges Oberflächenprofil, mit denen eine optimale Verteilung von Luft bzw. Brenngas bewirkt wird. Bei der pulvermetallurgischen Herstellung muss für jedes Design ein separates Werkzeug, das teuer ist, gefertigt werden. Dies macht eine Optimierung des Designs in der Praxis sehr aufwändig. Ausserdem gibt es ungünstige Designeinschränkungen, indem nämlich das Material gleichmässig verteilt sein muss, d.h. keine grösseren Materialballungen erlaubt sind. Noppen der Luftseite müssen daher versetzt gegenüber Noppen der Gasseite angeordnet sein. Abdichtungsdämme am Rand des Interkonnektors ergeben besondere Probleme.

Es gibt weitere Nachteile der bekannten Verfahren zur pulvermetallurgischen Herstellung von Interkonnektoren oder der Herstellung solcher Bauteile aus dünnen Blechen (dünner als 1 mm): Grössere Dichtflächen führen zu Verwerfungen des Bauteiles. Die Strukturelemente können bezüglich deren Formen, Höhen und gegenseitigen Anordnungen nur sehr limitiert gestaltet werden. Wegen einer Porosität des gesinterten Werkstoffs weisen die Bauteile eine Gasdurchlässigkeit auf, die bezüglich Korrosionserscheinungen und Wirkungsgrad der Brennstoffzelle schädlich ist. Gasundurchlässige Randabschlüsse, an denen weder Brenngas noch Luft durch treten können, machen zusätzliche Schweissungen erforderlich. Kanten sind abgerundet, was zu Abdichtproblemen führt. Bei der Verwendung von Blechen müssen diese so dünn gewählt werden, dass sich negative Auswirkungen auf die Oxidationseigenschaften der Bauteile einstellen.

Aufgabe der Erfindung ist es, einen Interkonnektor zu schaffen, bei dem die erwähnten Nachteile weitgehend vermieden sind. Diese Aufgabe wird durch den im Anspruch 1 definierten Interkonnektor gelöst.

Die abhängigen Ansprüche 2 bis 7 betreffen vorteilhafte Ausführungsformen des erfindungsgemässen Interkonnektors. Eine Brennstoffzellenbatterie mit diesem Interkonnektor ist Gegenstand der Ansprüche 8 bis 10.

### Nachfolgend wird die Erfindung anhand der Zeichnungen erläutert. Es zeigen:

- Fig. 1: einen Querschnitt durch eine Platte sowie einen aus der Platte hergestellten Interkonnektor gemäss der Erfindung und
- Fig. 2: einen Querschnitt durch einen zweiten erfindungsgemässen Interkonnektor, der etwas andere Oberflächenprofile aufweist.

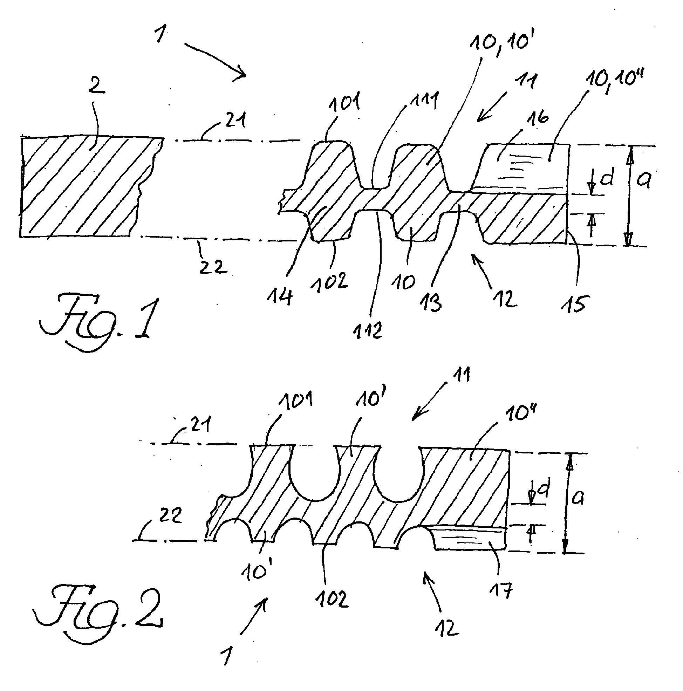

Ein Interkonnektor 1 für eine planare Hochtemperatur-Brennstoffzelle, wie er in Fig. 1 abschnittsweise als Querschnitt dargestellt ist, hat ein luftseitiges Oberflächenprofil 11 und ein gasseitiges Oberflächenprofil 12. Die Profile 11, 12 spannen zwei parallele Kontaktebenen 21, 22 auf. In Zonen zwischen ersten Grundflächen 111 des Profils 11 und der Kontaktebene 21 bzw. zwischen zweiten Grundflächen 112 und der Kontaktebene 22 sind Strukturelemente 10 wie beispielsweise Noppen 10' enthalten, die luftseitige bzw. gasseitige Kontaktflächen 101, 102 auf der entsprechenden Kontaktebene 21, 22 bilden. Trennwände 13 zwischen den ersten und zweiten Grundflächen 111, 112 weisen eine Dicke d von mindestens 0.3 mm auf oder - um ein stabileres Bauteil 1 zu erhalten - 0.5 mm. Der Abstand a zwischen den beiden Kontaktebenen 21, 22 ist grösser als 2 mm, falls der Durchmesser der Brennstoffzelle relativ klein ist. Für grössere Durchmesser ist es vorteilhafter, wenn a mindestens 3, 4 oder 5 mm beträgt, da dies tiefere Profile 11, 12 und somit kleiner Strömungswiderstände für den Luft- bzw. Gasstrom bedeutet. Das Verhältnis zwischen a und d kann beispielsweise grösser als 5 sein, was bei der Pulvermetallurgie praktisch unmöglich ist. Die Strukturelemente 10 des einen Profils 11 sind relativ zu den Strukturelementen 10 des anderen Profils 12 so angeordnet, dass an verschiedenen, uneingeschränkt vorgegebbaren Stellen jeweils zwischen einer der luftseitigen und einer der gasseitigen Kontaktflächen 101, 102 sowie senkrecht zu den Kontaktebenen 21, 22 ein mit Material gefüllter Verbindungsbereich 14 besteht.

Zur Herstellung des Interkonnektors 1 wird eine glatte, aus einem weitgehend porenfreien Werkstoff bestehende Platte 2 (links in Fig. 1) verwendet. Die Profile 11, 12 sind durch Materialabtrag aus der Platte 2 heraus gearbeitet. Diese Herstellung wird durch Anwendung eines elektrochemischen Senkerosionsverfahrens oder eines photochemischen Ätzverfahrens durchgeführt. In Fig. 1 ist das Produkt des Senkerosionsverfahrens schematisch gezeigt, in Fig. 2 das Produkt des Ätzverfahrens. Beim Senkerosionsverfahrens wird auf die Platte 2 mit einer vibrierenden Elektrode (50 Hz), die ein komplementäres Oberflächenprofil trägt, unter Anlegen einer Gleichspannung elektrochemisch eingewirkt. Beim Ätzverfahren kommt ein Photolack zum Einsatz, mit dem die Platte 2 beschichtet wird. In der belichteten Photolackschicht lassen sich mit einem Lösungsmittel Teilflächen der Platte freilegen, die dann für eine Ätzflüssigkeit zugänglich sind. Die offenen Teilflächen lassen die Ätzflüssigkeit weitgehend gleichmässig bis an durch den schützenden Lack gebildeten Grenzen einwirken. Es entstehen so Mulden zwischen scharfkantigen Konturen der Kontaktflächen 101, 102. Bei tiefen Mulden gibt es auch eine Unterätzung, wie dies in Fig. 2 auf der Luftseite (Profil 11 ) angedeutet ist. Beim Senkerosionsverfahrens entstehen weniger deutliche Konturen der Kontaktflächen 101, 102.

Die Oberflächenprofile 11, 12 sind in der Regel beschichtet. Die Beschichtungen, die elektrisch leitend sein müssen, haben die Funktion von Schutzschichten (Oxidationsschutz; Barriere gegen einen Transport von flüchtigem Chromoxid).

Einzelne der mit Material gefüllten Verbindungsbereiche 14 sind beispielsweise durch Strukturelemente 10" gebildet, die an der Peripherie 15 des Interkonnektors 1 angeordnet sind, wobei diese Strukturelemente 10" für einen gasundurchlässigen Randabschluss in einem Stapel von Brennstoffzellen vorgesehen sind. Weitere mit Material gefüllten Verbindungsbereiche 14 können durch Noppen 10' oder Teile von Noppen 10' gebildet sein, wobei die Noppen 10' insbesondere so angeordnet sind, dass Verbindungsgeraden von Mittelpunkten der Noppen 10' senkrecht zu den Kontaktebenen 21, 22 stehen (Fig. 1). Die Noppen 10' sind also nicht mehr gegeneinander versetzt angeordnet. Solche Verbindungsbereiche 14 der Noppen 10' sind für eine Leitung des elektrischen Stroms durch den Interkonnektor 1 hinsichtlich einer Reduktion des elektrischen Widerstands vorteilhaft.

Mit der Anwendung der genannten Bearbeitungsverfahren lässt sich für das Oberflächenprofil 11 oder 12 eine topographische Strukturierung nach einem weitgehend frei vorgegebenen Muster und mit grosser Genauigkeit herstellen. Es ist eine Genauigkeit realisierbar, die es erlaubt, beispielsweise Noppen nach einem speziellen Muster zu erzeugen, gemäss dem alle Noppen die gleiche Form haben und eine rasterförmige Anordnung mit einer Dichte von mindestens 100 000 Noppen pro m² bilden. Es sind auch mindestens 500 000 Noppen pro m² möglich. Dabei ergeben sich für ein solches Muster Kontaktwiderstände an den Kontaktflächen 101, 102 in der Brennstoffzelle, die alle weitgehend gleich gross sind. Die Häufigkeitsverteilung der Kontaktwiderstände hat eine relativ kleine Standardabweichung, die insbesondere höchstens 10 % des Mittelwerts der Verteilung beträgt.

Der Interkonnektor 1 ist aus einem Werkstoff hergestellt, der bei Temperaturen von 700°C bis 950°C und Vorliegen von oxidierten Kontaktflächen 101, 102 für die Verwendung in den Brennstoffzellen eine ausreichend gute elektrische Leitfähigkeit aufweist. Der Werkstoff ist eine Chrombasis-Legierung (z.B. Cr5Fe1Y₂O₃) oder eine ferritische Legierung mit einem Chromgehalt, der mindestens 15 Gew%, besser über 20 Gew% beträgt.

In einer Brennstoffzellenbatterie sind die Brennstoffzellen gestapelt. Die Interkonnektoren 1 bilden mit elektrochemisch aktiven Scheiben (PEN-Elementen) eine alternierende Abfolge. An den beiden Enden des Stapels ist je eine Stromsammelplatte für eine Luftseite bzw. Gasseite angeordnet. Diese Platten sind mit Vorteil aus dem gleichen Werkstoff wie die Interkonnektoren 1 hergestellt. Auf der einen Plattenseite ist ein Oberflächenprofil hergestellt; und dieses ist ein luftseitiges bzw. gasseitiges Oberflächenprofil 11, 12 mit entsprechend der gleichen topographischen Strukturierung, die bei den Interkonnektoren 1 vorliegt.

Die Brennstoffzellen sind bei einer bevorzugten Ausführungsform der Brennstoffzellenbatterie kreisförmig. Der zylindrische Zellenstapel enthält einen zentralen Gasverteilungskanal. An der Stapelperipherie sind axial ausgerichtete Nachverbrennungsräume mit kanalförmigen Wandungen angeordnet. Diese Wandungen weisen zwischen seitlichen Rändern und den Interkonnektoren 1 Dichtungsstreifen auf. An diesen Stellen befinden sich gasundurchlässige Randabschlüsse der Interkonnektoren. Zwischen den Nachverbrennungsräumen befinden sich jeweils im luftseitigen Oberflächenprofil der Interkonnektoren Durchgänge 16 (Fig. 1) für einen Lufteintritt. Entsprechende Durchgänge 16, 17 für Luft und Gas befinden sich im Innenbereich der Nachverbrennungsräume.

## Patentansprüche

1. Interkonnektor (1) für eine planare Hochtemperatur-Brennstoffzelle, mit einem luftseitigen Oberflächenprofil (11) und einem gasseitigen Oberflächenprofil (12), welche Profile zwei parallele Kontaktebenen (21, 22) aufspannen sowie Strukturelemente (10) umfassen, die jeweils in einer Zone zwischen ersten bzw. zweiten Grundflächen (111, 112) des Profils und der einen der Kontaktebenen enthalten sind, wobei die Strukturelemente luftseitige bzw. gasseitige Kontaktflächen (101, 102) auf der entsprechenden Kontaktebene bilden, Trennwände (13) zwischen den beiden Grundflächen eine Dicke d von mindestens 0.3 mm aufweisen, der Abstand a zwischen den beiden Kontaktebenen grösser als 2 mm ist, das Verhältnis zwischen a und d grösser als 5 sein kann, und die Strukturelemente des einen Profils relativ zu den Strukturelementen des anderen Profils so angeordnet sind, dass an verschiedenen, uneingeschränkt vorgegebbaren Stellen jeweils zwischen einer luftseitigen und einer gasseitigen Kontaktfläche sowie senkrecht zu den Kontaktebenen ein mit Material gefüllter Verbindungsbereich (14) besteht, wobei zur Herstellung des Interkonnektors eine glatte, aus einem weitgehend porenfreien Werkstoff bestehende Platte (2) verwendet ist, aus der die Profile durch Materialabtrag heraus gearbeitet sind, und diese Herstellung durch Anwendung eines elektrochemischen Senkerosionsverfahrens oder eines photochemischen Ätzverfahrens durchgeführt ist.

2. Interkonnektor nach Anspruch 1, **dadurch gekennzeichnet, dass** die Oberflächenprofile (11, 12) beschichtet sind und die Beschichtungen elektrisch leitende Schutzschichten bilden.

3. Interkonnektor nach Anspruch 1 oder 2, **dadurch gekennzeichnet, dass** einzelne der mit Material gefüllten Verbindungsbereiche (14) durch an der Peripherie (15) des Interkonnektors (1) angeordnete Strukturelemente (10) gebildet sind und diese Strukturelemente für einen gasundurchlässigen Randabschluss (10") in einem Stapel von Brennstoffzellen vorgesehen sind.

4. Interkonnektor nach einem der Ansprüche 1 bis 3, **dadurch gekennzeichnet, dass** einzelne der mit Material gefüllten Verbindungsbereiche (14) durch Strukturelemente (10) in Form von Noppen (10') oder Teilen von Noppen gebildet sind, wobei insbesondere Mittelpunkte der Noppen zumindest angenähert auf Geraden liegen, die senkrecht zu den Kontaktebenen (21, 22) stehen.

5. Interkonnektor nach einem der Ansprüche 1 bis 4, **dadurch gekennzeichnet, dass** das Oberflächenprofil (11, 12) eine topographische Strukturierung aufweist, die nach einem vorgegebenen Muster hergestellt ist, wobei bei dieser Herstellung eine Genauigkeit realisierbar ist, die es erlaubt, beispielsweise Noppen (10) nach einem speziellen Muster zu erzeugen, gemäss dem alle Noppen die gleiche Form haben sowie eine rasterförmige Anordnung mit einer Dichte von mindestens 100 000 Noppen pro m² bilden, und für ein solches Muster sich Kontaktwiderstände in der Brennstoffzelle ergeben, die weitgehend gleich gross sind, so dass deren Häufigkeitsverteilung eine relativ kleine Standardabweichung hat, die insbesondere höchstens 10 % des Mittelwerts der Verteilung beträgt.

6. Interkonnektor nach einem der Ansprüche 1 bis 5, **dadurch gekennzeichnet, dass** er aus einem Werkstoff hergestellt ist, der bei Temperaturen von 700°C bis 950°C und Vorliegen von oxidierten Kontaktflächen (101, 102) für die Verwendung in den Brennstoffzellen eine ausreichend gute elektrische Leitfähigkeit aufweist.

7. Interkonnektor nach Anspruch 6, **dadurch gekennzeichnet, dass** der Werkstoff eine Chrombasis-Legierung ist oder eine ferritische Legierung mit einem Chromgehalt, der mindestens 15 Gew% beträgt.

8. Brennstoffzellenbatterie mit Interkonnektoren (1) gemäss einem der Ansprüche 1 bis 7, welche in einem Stapel von Zellen alternierend zwischen elektrochemisch aktiven Scheiben angeordnet sind.

9. Brennstoffzellenbatterie nach Anspruch 8, **dadurch gekennzeichnet, dass** an den beiden Enden des Stapels je eine Stromsammelplatte für eine Luftseite bzw. Gasseite angeordnet ist, die aus dem gleichen Werkstoff wie die Interkonnektoren (1) hergestellt ist und auf deren einen Seite ein Oberflächenprofil vorhanden ist, das ein luftseitiges bzw. gasseitiges Oberflächenprofil ist mit entsprechend der gleichen topographischen Strukturierung wie der Interkonnektor.

10. Brennstoffzellenbatterie nach Anspruch 8 oder 9, **dadurch gekennzeichnet, dass** die Zellen kreisförmig ausgebildet einen zylindrischen Zellenstapel bilden, der einen zentralen Gasverteilungskanal enthält, dass an der Stapelperipherie (15) axial ausgerichtete Nachverbrennungsräume mit kanalförmigen Wandungen angeordnet sind, dass diese Wandungen zwischen seitlichen Rändern und den Interkonnektoren Dichtungsstreifen aufweisen, dass an diesen Stellen gasundurchlässige Randabschlüsse der Interkonnektoren (1) sich befinden, und dass zwischen diesen Randabschlüsse jeweils im luftseitigen Oberflächenprofil (11) der Interkonnektoren Durchgänge (16) für einen Lufteintritt angeordnet sind.
